# EUROPEAN PATENT SPECIFICATION

(11) **EP 3 034 639 B1**
(45) Date of publication and mention of the grant of the patent: **11.10.2017**
(21) Application number: 15198551.2
(22) Date of filing: 08.12.2015
(51) Int. Cl.: C22C 19/05

(54) **NICKEL-BASED SUPERALLOYS AND ADDITIVE MANUFACTURING PROCESSES USING NICKEL-BASED SUPERALLOYS**
SUPERLEGIERUNGEN UND ADDITIVHERSTELLUNGSVERFAHREN MIT NICKELBASIERTEN SUPERLEGIERUNGEN
SUPERALLIAGES À BASE DE NICKEL ET PROCÉDÉS DE FABRICATION D'ADDITIFS À L'AIDE DE SUPERALLIAGES À BASE DE NICKEL

(30) Priority: 16.12.2014 US 201414571332
(43) Date of publication of application: 22.06.2016
(73) Proprietor: Honeywell International Inc., Morris Plains, NJ 07950 (US)
(72) Inventor: SZUROMI, Andrew, Morris Plains, NJ New Jersey 07950 (US); DEUTCHMAN, Hallee Zox, Morris Plains, NJ New Jersey 07950 (US); BAUGHMAN, Brian G., Morris Plains, NJ New Jersey 07950 (US); GODFREY, Donald G., Morris Plains, NJ New Jersey 07950 (US); KINGTON, Harry Lester, Morris Plains, NJ New Jersey 07950 (US); MORRIS, Mark C., Morris Plains, NJ New Jersey 07950 (US)
(74) Representative: Houghton, Mark Phillip

(56) References cited:
- EP-A1- 2 730 669
- US-A- 3 526 499
- US-A1- 2009 185 944
- US-A1- 2014 034 626

## Description

### TECHNICAL FIELD

The present disclosure is generally directed to metal alloys with improved weldability and processes of manufacture using metal alloys. More particularly, the present disclosure is directed to nickel-based superalloys and additive manufacturing processes using nickel-based superalloys. The disclosed metal alloys and processes of manufacture find application, for example, in aerospace components, such as gas turbine engine components.

### BACKGROUND

Additive manufacturing is a group of processes characterized by manufacturing three-dimensional components by building up substantially two-dimensional layers (or slices) on a layer by layer basis. Each layer is generally very thin (for example between about 20 to about 100 microns) and many layers are formed in a sequence with the two dimensional shape varying on each layer to provide the desired final three-dimensional profile. In contrast to traditional "subtractive" manufacturing processes where material is removed to form a desired component profile, additive manufacturing processes progressively add material to form a net shape or near net shape final component.

There is a desire to use additive manufacturing for the manufacture of superalloy components, for example for the manufacture of gas turbine engine components for aerospace and other applications. Superalloys are metal alloys that are designed for high performance at elevated temperatures. In particular, superalloys are generally defined as an alloy with excellent mechanical strength and creep resistance at high temperatures. The nature of superalloy materials, however, results in several difficulties for additive manufacturing. For example, the high temperature strength of a superalloy is the result of a microstructure that makes them prone to cracking. A number of superalloys are generally considered to be "difficult to weld" (and therefore difficult to form in an additive manufacturing process) due to their tendency to cracking, in particular nickel-based superalloys with a high proportion of gamma-prime phase forming elements, such as aluminium and titanium.

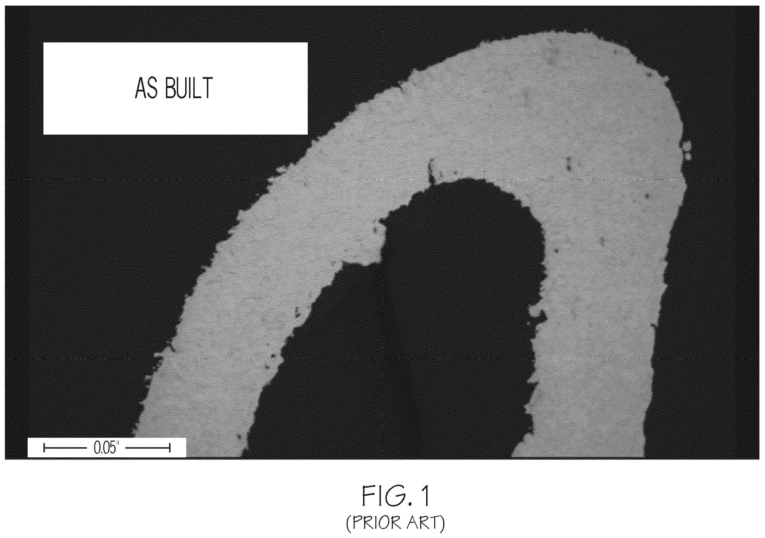

One such "difficult to weld" nickel-based superalloy is Mar-M-247®, available from the Cannon Muskegon Specialty Materials and Alloys Group, Muskegon, Michigan, USA. Mar-M-247 has a higher fraction of gamma-prime phase with solid solution strengtheners, making it a desirable superalloy for highly-stressed gas turbine engine components such as turbine blades and vanes. However, the current additive manufacturing processes for creating Mar-M-247 components result in significant component cracking, including internal and surface-connected cracking, as shown in FIG. 1.

One possible solution to reduce or avoid cracking during additive manufacturing processes is to maintain the bulk part close to its melting temperature during formation. However, in the case of high temperature materials, such as superalloys, the temperature required is extremely high, for example, over 1200 °C. The consequence of this is that the equipment is costly and complex, particularly for laser-based systems, and the process is slowed by the need for heat-up and cool-down times, rendering any such manufacturing process costly and difficult to practice.

Another possible solution is proposed in "PRESENTATION OF EC PROJECT FANTASIA; SESSION 4C: ADVANCED MANUFACTURING TECHNICS FOR ENGINE COMPONENTS" pages 31-35, dated 31 March 2011, and presented by Konrad Wissenbach, Fraunhofer Institute for Laser Technology ILT, Aachen, Germany (available at: www.cdti.es/recursos/doc/eventosCDTI/ Aerodays2011/4C2.pdf). In this proposal,the cracks formed during the additive manufacturing of the Mar-M-247 component are treated by preheating the whole component to a temperature of 1150 °Cbefore laser re-melting the entire surface of the component. This provides a component having a sealed surface which is then treated by hot isostatic pressing (HIP), and is reported to remove internal cracks and provide a substantially crack free final component. However, in the case of thin-walled structures such as internally-cooled turbine blades and vanes, macro-cracking (excessively long and open cracks) may be formed that are well beyond what the HIP process can close.

Yet another possible solution to reduce or avoid cracking during additive manufacturing processes is proposed in United States Patent Application Publication no. 2014/0034626 A1. Disclosed therein is an additive manufacturing method wherein a powder bed of superalloy powder is selectively scanned with a focused laser beam in a line-by-line manner. The spacing between adjacent scan lines is no more than twice the layer thickness being formed. A compressive stress treatment is applied to the surface of the final component prior to separation of the component from the substrate. This line-by-line proposal, however, requires a significant modification to standard additive manufacturing processes, thus undesirably increasing cost and component development time.

As demonstrated above, the prior art is replete with attempts to post-treat cracked Mar-M-247 components formed by additive manufacturing, or to modify the additive manufacturing process itself to reduce the incidence of cracking. The prior art, however, is devoid of any attempts to modify the chemistry of the Mar-M-247 alloy to improve its weldability and to adapt it for use in conventional additive manufacturing processes.

Therefore, it will become apparent to those skilled in the art that there remains a present and continuing need for the provision of improved nickel-based superalloys and methods of using such superalloys for improved weldability and for use in additive manufacturing processes. Particularly, it would be desirable to provide a superalloy based on Mar-M-247 but with an improved chemistry that better adapts the alloy for use with additive manufacturing processes and for other process applications where improved weldability is needed, such as for general weld filler material, a more weld repairable casting alloy, and for weld repairable wrought applications. Furthermore, other desirable features and characteristics of the inventive subject matter will become apparent from the subsequent detailed description of the inventive subject matter and the appended claims, taken in conjunction with the accompanying drawings and this background of the disclosure.

### BRIEF SUMMARY

Nickel-based superalloys and additive manufacturing processes using nickel-based superalloys are disclosed herein. In one exemplary embodiment, a nickel-based superalloy includes, on a weight basis of the overall superalloy: about 9.5% to about 10.5% tungsten, about 9.0% to about 11.0% cobalt, about 8.0% to about 8.8% chromium, about 5.3% to about 5.7% aluminum, about 2.8% to about 3.3% tantalum, about 0.3% to about 1.6% hafnium, about 0.5% to about 0.8% molybdenum, about 0.005% to about 0.04% carbon, and a majority of nickel. Additionally, in some examples, the nickel-based superalloy may include silicon in an amount of less than about 0.005%, boron in an amount of less than about 0.005%, zirconium in an amount of less than about 0.005%, and titanium in an amount of less than about 0.005%. In other examples, phosphorous is present in an amount of less than about 0.005% and sulfur is present in an amount of less than about 0.002%. In still further examples, manganese, iron, copper, and niobium are present in amounts of less than about 0.1%, with respect to each such element.

In another exemplary embodiment, a method of manufacturing a nickel-based superalloy component includesproviding or obtaining, in a powdered form, a build material alloy including, on a weight basis of the overall build material alloy: about 9.5% to about 10.5% tungsten, about 9.0% to about 11.0% cobalt, about 8.0% to about 8.8% chromium, about 5.3% to about 5.7% aluminum, about 2.8% to about 3.3% tantalum, about 0.3% to about 1.6% hafnium, about 0.5% to about 0.8% molybdenum, about 0.005% to about 0.04% carbon, and a majority of nickel. The method further includes subjecting the build material alloy to a high energy density beam in an additive manufacturing process to selectively fuse portions of the build material to form a built component and subjecting the built component to a finishing process to precipitate a gamma-prime phase of the nickel-based superalloy. In some examples, the additive manufacturing process may be DMLS, and the finishing process may include heat treatment or hot isostatic pressing. Further, in some examples, encapsulation may be performed as part of the finishing process.

In yet another exemplary embodiment, a nickel-based superalloy component includes a nickel-based superalloy metal. The nickel-based superalloy metal includes, on a weight basis of the overall superalloy metal:about 9.5% to about 10.5% tungsten, about 9.0% to about 11.0% cobalt, about 8.0% to about 8.8% chromium, about 5.3% to about 5.7% aluminum, about 2.8% to about 3.3% tantalum, about 0.3% to about 1.6% hafnium, about 0.5% to about 0.8% molybdenum, about 0.005% to about 0.04% carbon, and a majority of nickel. In some examples, the component includes a gas turbine engine component, such as a turbine blade or a turbine vane, and the metal form of the nickel-based superalloy may be used as a filler metal for welding a casting alloy, a wrought alloy, or a powder metal alloy or other wrought forms.

This brief summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE FIGURES

The present disclosure will hereinafter be described in conjunction with the following drawing figures, wherein like numerals denote like elements, and wherein:
FIG. 1 is a prior art image of a nickel-based superalloy turbine engine component manufactured using an additive manufacturing process that exhibits significant cracking;
FIG. 2 is a continuous cooling transformation (CCT) diagram for the prior art Mar-M-247 superalloy;
FIG. 3 provides a flowchart illustrating a method for manufacturing a component using additive manufacturing techniques in accordance with an exemplary embodiment of the present disclosure;
FIG. 4 is a schematic view of a DMLS system for manufacturing the component in accordance with an exemplary embodiment of the present disclosure;
FIG. 5 illustrates a turbine engine component manufactured from a nickel-based superalloy using additive manufacturing processes according to an exemplary embodiment of the present disclosure; and
FIG. 6 is a CCT diagram for a nickel-based superalloy in accordance with an exemplary embodiment of the present disclosure.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Unless specifically stated or obvious from context, as used herein, the term "about" is understood as within a range of normal tolerance in the art.

Embodiments of the present disclosure provide an improved nickel-based superalloy and additive manufacturing processes using this nickel-based superalloy. The disclosed embodiments detail an improved nickel-based superalloy chemistry that better adapts the alloy for weldability and for use with additive manufacturing processes.

Particularly, in order to create an additive manufacturing-producible superalloy that both exhibits the desirable high-temperature strength and creep resistance exhibited by Mar-M-247 and avoids the macro-cracking experience by Mar-M-247 when used in additive manufacturing processes, the very fast cooling rates that occur during conventional additive manufacturing processes, which in turn affect the gamma-prime precipitation, which in turn affects cracking potential, should be addressed. These fast cooling rates contribute to crack initiation and propagation when using Mar-M-247 due to their effect on gamma-prime precipitation. Accordingly, it would be desirable to provide a superalloy chemistry that can survive these fast cooling rates. This can be achieved by better adapting the solvus temperature of the primary strengthening phase in nickel-based superalloys, gamma-prime, as further disclosed below.

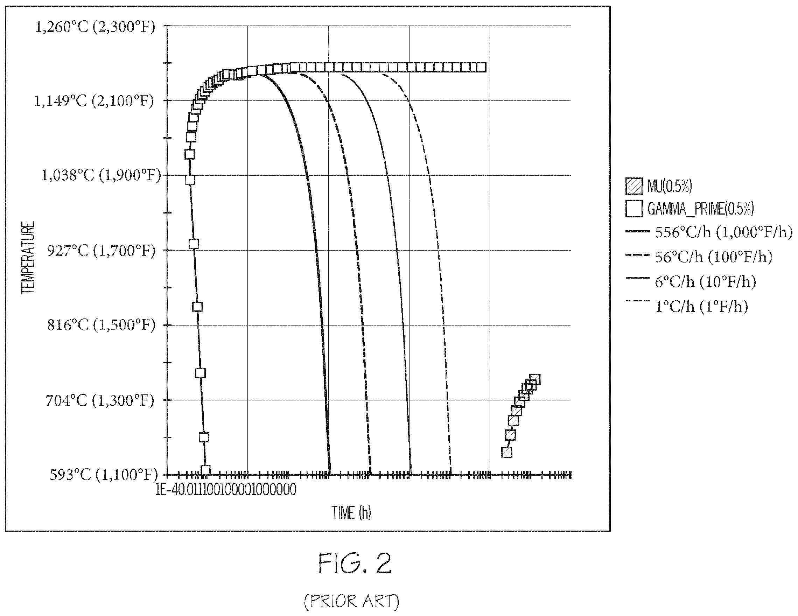

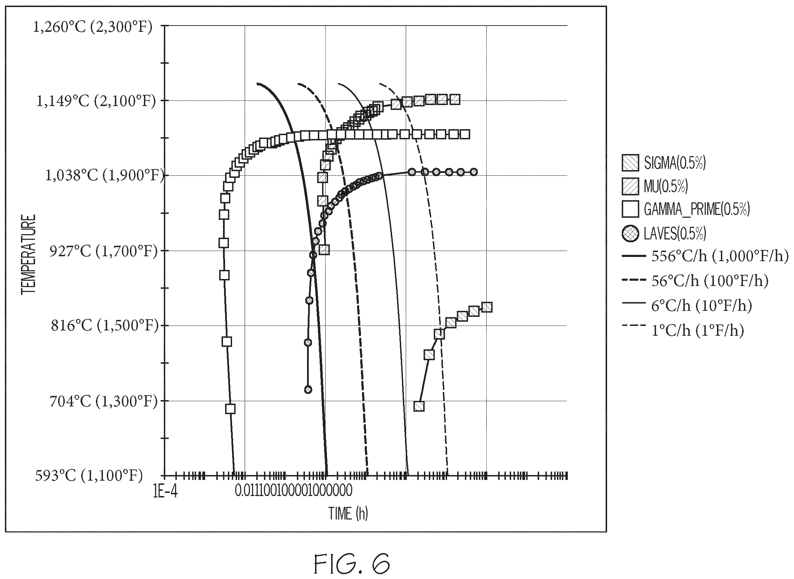

As noted above, Mar-M-247 is generally classified as a "difficult to weld" alloy system, partially due to its large aluminum and titanium content. These two elements are the primary formers of the gamma-prime phase. It is postulated that the large volume fraction of the gamma-prime phase is contributing to significant build failures in current additive manufacturing processes. FIG. 2 shows the continuous cooling transformation (CCT) diagram for MM247 in its current composition. As seen in FIG. 2, the gamma-prime solvus temperature is about 1204°C (2200 °F). It is generally found that as the gamma-prime solvus temperature increases in nickel-based superalloys, the volume fraction of the gamma-prime phase increases as well. As a failure mode of Mar-M-247 through additive manufacturing is likely due to the large amount of gamma-prime present upon fast cooling, embodiments of the present disclosure provide a nickel-based superalloy chemistry that suppresses the initial gamma-prime phase precipitation during additive manufacturing processes (see FIG. 6, discussed in greater detail below), thus better enabling component fabrication with these additive manufacturing processes. The initially-suppressed gamma-prime phase is allowed to more fully precipitate-out during later heat treatments (subsequent to initial component fabrication) in order to achieve the high volume fraction necessary for high temperature strength applications. For example, as described in greater detail below, although the inventive alloy of the present disclosure does not contain a reduced level of Al as compared to Mar-M-247, the chemistry of the presently-disclosed alloy suppresses the initial gamma-prime phase precipitation as indicated in FIG. 6.

In accordance with an embodiment of the present disclosure, an "additive manufacturing-friendly" nickel-based superalloy is achieved, in part, by providing a carbon content that is below the existing elemental ranges for the traditional high carbon baseline Mar-M-247 composition (*see, for example*, United States Patent nos. 3,720,509, 3,677,747, and 3,526,499) and also below the newer low-carbon version of Mar-M-247 (*see, for example*, United States Patent no. 4,461,659), the resultant superalloy possesses a sufficient amount of gamma-prime phase and a strong solid solution strengthening response, along with other desired attributes of the conventional Mar-M-247 alloy, for improving fabrication yield using additive manufacturing processes. Other distinguishing characteristics of the presently-disclosed nickel-based superalloys are provided below.

The composition of an exemplary nickel-based superalloy is now provided below with respect to its constituent elements (all percentages being provided on a weight basis of the overall alloy composition, unless otherwise noted). In one embodiment, elements that are associated with grain boundary cracking and embrittlement should be minimized. For example, in this embodiment, the content of silicon (Si) is maintained below or equal to about 0.005%. The content of phosphorous (P) is maintained below or equal to about 0.005%. Further, the content of sulfur (S) is maintained below or equal to about 0.002%. As an additional matter, to reduce cracking, the master heat alloy that is used to process the alloy to powder form desirably does not contain any casting revert or scrap having detrimental tramp or trace elements.

Elements that are associated with grain boundary strengthening, including carbon (C), boron (B), zirconium (Zr), and hafnium (Hf) are melting point depressants. Grain boundary liquation during welding of superalloys is linked to carbides and borides. Since C (but not B)achieves a "carbon boil" during master alloy refining, embodiments of the nickel-based superalloy retain some carbon, likely in the form of carbides (as described below) but not a significant content of borides. Accordingly, the content of B is maintained below or equal to about 0.005%.

While Zr and Hf are chemically similar in some respects, Hf is beneficial for grain boundary strengthening and carbide morphology control. Therefore, the content of Zr is maintained below or equal to about 0.005%.

Titanium (Ti) is both a carbide and gamma-prime phase forming element. However, Ti-rich carbides tend to form initiation sites for cracking at C levels above about 0.02%, negatively affecting component life. Because the disclosed alloy also includes aluminum (Al) and tantalum (Ta) (as set forth below), which are also gamma-prime phase forming elements, there is no need to include Ti in the additive manufacturing-friendly alloys of the present disclosure. Accordingly, the content of Ti is maintained below or equal to about 0.005%.

Additionally, without significant Ti, the amount of C present can safely extend above 0.02% without forming the script carbides that act as initiation sites for cracking. As such, in one embodiment, the content of C is from about 0.005% to about 0.04%. As noted above, the carbon content is below the existing elemental ranges for the traditional high carbon baseline Mar-M-247 composition and also below the newer low-carbon version of Mar-M-247. Still, the resultant superalloy possesses a sufficient amount of gamma-prime phase and a strong solid solution strengthening response, along with other desired attributes of the conventional Mar-M-247 alloy, for improving weldability and fabrication yield using additive manufacturing processes.

With the aforementioned relatively lower C and B content, the undesirable formation of topologically close-packed (TCP) brittle phases requires concomitant lowering of the minimum amounts of several refractory elements known to form TCP phases. For example, chromium (Cr), molybdenum (Mo), cobalt (Co), and tungsten (W) can combine to form TCP phases. Of these, reducing the Cr lower limit is desirably avoided because Cr plays a role in oxidation/sulfidation resistance. Accordingly, in one embodiment, the content of Cr is from 8.0% to about 8.8%.

Mo is known to lower density, is a solid solution strengthening element, and increases the Al partitioning to the gamma-prime phase, but there is evidence in the art that Mo may be detrimental to hot corrosion or oxidation resistance. Mo oxide volatility may also be a negative factor. Accordingly, the content of Mo is desirably reduced. In one embodiment, the content of Mo is from about 0.5% to about 0.8%.

Co is a solid solution strengthening element, but it can contribute to TCP phase formation. Accordingly, permitting a lower Co content has been discovered to be beneficial. Thus, in one embodiment, the content of Co is from about 9.0% to about 11.0%.

Furthermore, W is known to be an element that forms carbides, that acts as a solid solution strengthening element, and that forms TCP phases. With less C present as described above, levels of W used in the prior art may be too high. However, with lowered Mo content, a higher W content is desirable to compensate. Accordingly, a compromise is achieved wherein W content is maintained at known levels, which are, in an embodiment, from about 9.5% to about 10.5%.

Continuing with the description of an exemplary embodiment of the nickel-based superalloy, tantalum (Ta) is known to be an element that forms carbides and a solid solution strengthening element that also partitions to the gamma-prime phase. Allowing a higher content of Ta will favor Ta-rich carbides and make up for the absence of Ti in the gamma-prime phase while contributing to solid solution strengthening. Accordingly, in an embodiment, the contentof Ta is from about 2.8% to about 3.3%.

As initially noted above, Hf improves the grain boundary strength, but it may lead to eutectic pools that weaken the alloy microstructure. Hf also inhibits the carbides that form crack initiation sites and promotes blocky carbide morphology, thus avoiding script-type carbides that form crack initiation sites. Accordingly, the content of Hf is lowered below the content known in the prior art, which in an embodiment is from about 0.3% to about 1.6%.

Al, as a gamma-prime phase forming element, is also included in the alloy composition of the present disclosure. In one embodiment, the content of Al is from about 5.3% to about 5.7%.

Moreover, as the described superalloys are nickel-based, it will be appreciated that nickel (Ni) forms a majority of the content (i.e., greater than about 50%) of the described superalloy. That is, nickel typically accounts for the balance of the content not otherwise described above, while accounting for unavoidable impurities not otherwise set forth above as are commonly understood in the art.

**Table 1, set forth below, provides the elemental content of a nickel-based superalloy of the present disclosure in accordance with the description provided above, while also specifying the maximum content of additional detrimental tramp or trace elements commonly encountered in nickel-based superalloys. Each weight percentage included in Table 1 is understood to be preceded by the term "about." In addition, a minimum of zero means "low as possible", not to exceed the maximum. The superalloy as set forth below may be referred to as "HON-247" for trade purposes.**

| **Element** | **Minimum Content** | **Maximum Content** |
|---|---|---|
| Carbon | 0.005 | 0.04 |
| Silicon | 0 | 0.005 |
| Boron | 0 | 0.005 |
| Zirconium | 0 | 0.005 |
| Hafnium | 0.3 | 1.6 |
| Titanium | 0 | 0.005 |
| Aluminum | 5.3 | 5.7 |
| Chromium | 8.0 | 8.8 |
| Molybdenum | 0.5 | 0.8 |
| Tantalum | 2.8 | 3.3 |
| Cobalt | 9.0 | 11.0 |
| Tungsten | 9.5 | 10.5 |
| Sulfur | 0 | 0.002 |
| Phosphorous | 0 | 0.005 |
| Manganese | 0 | 0.1 |
| Iron | 0 | 0.1 |
| Copper | 0 | 0.1 |
| Niobium | 0 | 0.1 |
| Nickel | *Balance* | *Balance* |

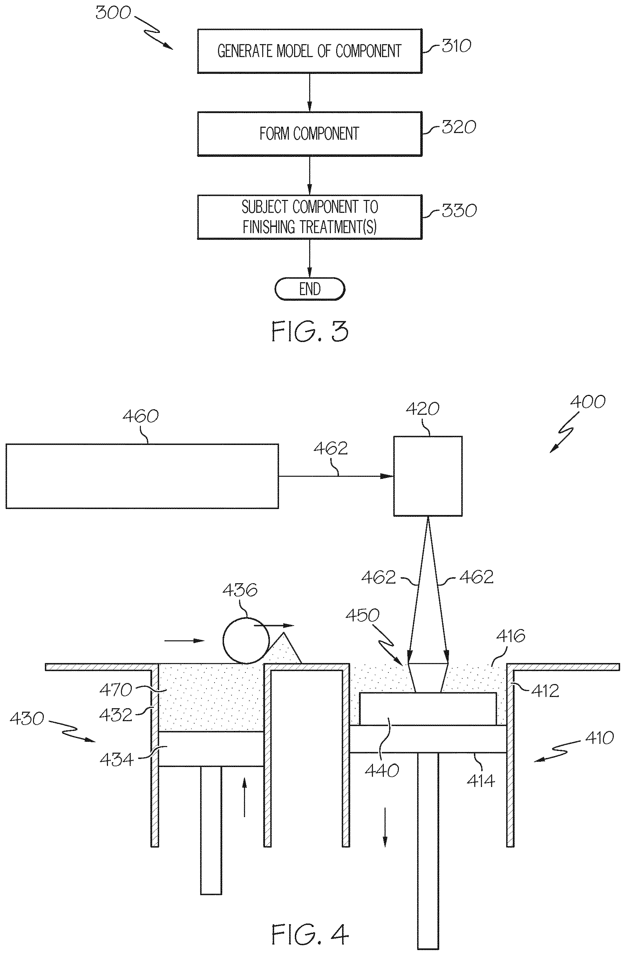

As initially noted above, the above-described nickel-based superalloy is adapted for use in conventional additive manufacturing processes to form net or near-net shaped components, such as components of a gas turbine engine. As such, in accordance with an exemplary embodiment, FIG. 3 provides a flowchart illustrating a method 300 for manufacturing a component, for example a gas turbine engine component, using, in whole or in part, powder bed additive manufacturing techniques based on various high energy density energy beams. In a first step 310, a model, such as a design model, of the component may be defined in any suitable manner. For example, the model may be designed with computer aided design (CAD) software and may include three-dimensional ("3D") numeric coordinates of the entire configuration of the component including both external and internal surfaces. In one exemplary embodiment, the model may include a number of successive two-dimensional ("2D") cross-sectional slices that together form the 3D component.

In step 320 of the method 300, the component is formed according to the model of step 310. In one exemplary embodiment, a portion of the component is formed using a rapid prototyping or additive layer manufacturing process. In other embodiments, the entire component is formed using a rapid prototyping or additive layer manufacturing process.

Some examples of additive layer manufacturing processes include: direct metal laser sintering (DMLS), in which a laser is used to sinter a powder media in precisely controlled locations; laser wire deposition in which a wire feedstock is melted by a laser and then deposited and solidified in precise locations to build the product; electron beam melting; laser engineered net shaping; and selective laser melting. In general, powder bed additive manufacturing techniques provide flexibility in free-form fabrication without geometric constraints, fast material processing time, and innovative joining techniques. In one particular exemplary embodiment, DMLS is used to produce the component in step 320. DMLS is a commercially available laser-based rapid prototyping and tooling process by which complex parts may be directly produced by precision sintering and solidification of metal powder into successive layers of larger structures, each layer corresponding to a cross-sectional layer of the 3D component.

As such, in one exemplary embodiment, step 320 is performed with DMLS techniques to form the component. However, prior to a discussion of the subsequent method steps of FIG. 3, reference is made to FIG. 4, which is a schematic view of a DMLS system 400 for manufacturing the component.

Referring to FIG. 4, the system 400 includes a fabrication device 410, a powder delivery device 430, a scanner 420, and a low energy density energy beam generator, such as a laser 460 (or an electron beam generator in other embodiments) that function to manufacture the article 450 (e.g., the component) with build material 470. The fabrication device 410 includes a build container 412 with a fabrication support 414 on which the article 450 is formed and supported. The fabrication support 414 is movable within the build container 412 in a vertical direction and is adjusted in such a way to define a working plane 416. The delivery device 430 includes a powder chamber 432 with a delivery support 434 that supports the build material 470 and is also movable in the vertical direction. The delivery device 430 further includes a roller or wiper 436 that transfers build material 470 from the delivery device 430 to the fabrication device 410.

During operation, a base block 440 may be installed on the fabrication support 414. The fabrication support 414 is lowered and the delivery support 434 is raised. The roller or wiper 436 scrapes or otherwise pushes a portion of the build material 470 from the delivery device 430 to form the working plane 416 in the fabrication device 410. The laser 460 emits a laser beam 462, which is directed by the scanner 420 onto the build material 470 in the working plane 416 to selectively fuse the build material 470 into a cross-sectional layer of the article 450 according to the design. More specifically, the speed, position, and other operating parameters of the laser beam 462 are controlled to selectively fuse the powder of the build material 470 into larger structures by rapidly melting the powder particles that may melt or diffuse into the solid structure below, and subsequently, cool and re-solidify. As such, based on the control of the laser beam 462, each layer of build material 470 may include un-fused and fused build material 470 that respectively corresponds to the cross-sectional passages and walls that form the article 450. In general, the laser beam 462 is relatively low power, but with a high energy density, to selectively fuse the individual layer of build material 470. As an example, the laser beam 462 may have a power of approximately 50 to 500 Watts, although any suitable power may be provided.

Upon completion of a respective layer, the fabrication support 414 is lowered and the delivery support 434 is raised. Typically, the fabrication support 414, and thus the article 450, does not move in a horizontal plane during this step. The roller or wiper 436 again pushes a portion of the build material 470 from the delivery device 430 to form an additional layer of build material 470 on the working plane 416 of the fabrication device 410. The laser beam 462 is movably supported relative to the article 450 and is again controlled to selectively form another cross-sectional layer. As such, the article 450 is positioned in a bed of build material 470 as the successive layers are formed such that the un-fused and fused material supports subsequent layers. This process is continued according to the modeled design as successive cross-sectional layers are formed into the completed desired portion, e.g., the component of step 320.

The delivery of build material 470 and movement of the article 450 in the vertical direction are relatively constant and only the movement of the laser beam 462 is selectively controlled to provide a simpler and more precise implementation. The localized fusing of the build material 470 enables more precise placement of fused material to reduce or eliminate the occurrence of over-deposition of material and excessive energy or heat, which may otherwise result in cracking or distortion. The unused and un-fused build material 470 may be reused, thereby further reducing scrap.

Any suitable laser and laser parameters may be used, including considerations with respect to power, laser beam spot size, and scanning velocity. The build material 470 is the nickel-based superalloy described above in connection with Table 1, provided in powdered form.

Returning to FIG. 3, at the completion of step 320, the article 450 (e.g., turbine engine component), is removed from the powder bed additive manufacturing system (e.g., from the DMLS system 400) and then may be given a stress relief treatment. In step 330, the component formed in step 320 may undergo finishing treatments. As noted above, embodiments of the present disclosure provide a nickel-based superalloy chemistry that suppresses the initial gamma-prime phase precipitation (although some gamma-prime phase is necessarily formed during the step 320), thus better enabling component fabrication with additive manufacturing processes. The initially-suppressed gamma-prime phase is allowed to more fully precipitate-out during later heat treatments (subsequent to initial component fabrication) in order to achieve the high volume fraction necessary for high temperature strength applications, such as described herein with respect to step 330. For example, in one embodiment, finishing treatments 330 include treatments that elevate the temperature of the component above the gamma-prime solvus temperature for a sufficient period of time to precipitate-out sufficient gamma-prime phase to achieve a desired strength. Such treatments include annealing and/or hot isostatic pressing (HIP), for example.

Additionally, encapsulation of the component may be performed in some embodiments as part of step 330. One such example is a HIP process in which an encapsulation layer is applied and pressure and heat are applied to remove or reduce any porosity and cracks internal to or on the surface of the component, as described in United States Patent Application Publication no. 2011/0311389, titled "METHODS FOR MANUFACTURING TURBINE COMPONENTS." The encapsulation layer functions to effectively convert any surface porosity and cracks into internal porosity and cracks, and after the application of pressure and heat, removes or reduces the porosity and cracks. Such encapsulation layers may be subsequently removed or maintained to function as an oxidation protection layer.

Other finishing treatments that may be performed as a part of step 330 include aging, quenching, peening, polishing, or applying coatings. Further, if necessary, machining may be performed on the component to achieve a desired final shape.

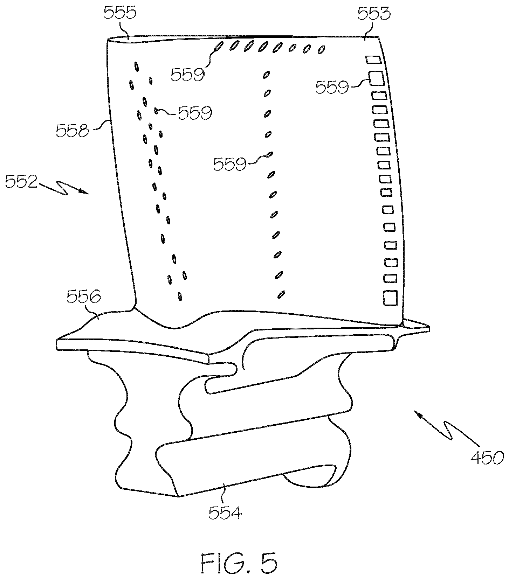

FIG. 5 is a perspective view of an exemplary turbine engine component (article)450 that is formed according to the additive manufacturing method described above with regard to FIG. 3 using the nickel-based superalloy set forth in Table 1. Here, the turbine engine component 550 is shown as a turbine blade. However, in other embodiments, the turbine engine component 550 may be a turbine vane or other component that may be implemented in a gas turbine engine, or other high-temperature system. In an embodiment, the turbine engine component 550 may include an airfoil 552 that includes a pressure side surface 553, an attachment portion 554, a leading edge 558 including a blade tip 555, and/or a platform 556. In accordance with an embodiment, the turbine engine component 550 may be formed with a non-illustrated outer shroud attached to the tip 555. The turbine engine component 550 may have non-illustrated internal air-cooling passages that remove heat from the turbine airfoil. After the internal air has absorbed heat from the blade, the air is discharged into a hot gas flow path through passages 559 in the airfoil wall. Although the turbine engine component 550 is illustrated as including certain parts and having a particular shape and dimension, different shapes, dimensions and sizes may be alternatively employed depending on particular gas turbine engine models and particular applications.

### ILLUSTRATIVE EXAMPLE

The present disclosure is now illustrated by the following non-limiting example. It should be noted that various changes and modifications may be applied to the following example and process without departing from the scope of this invention, which is defined in the appended claims. Therefore, it should be noted that the following example should be interpreted as illustrative only and not limiting in any sense.

A superalloy article was analyzed for DMLS fabrication based on a build material including elemental percentages in accordance with those presented in Table 1, above. A CCT diagram was prepared based on analysis of the superalloy article. This CCT diagram is provided in FIG. 6. As shown in FIG. 6, the superalloy article exhibits a gamma-prime solvus temperature of about 1102°C (2015 °F). Accordingly, the Example confirms that the presently-described nickel-based superalloys successfully reduce the gamma-prime solvus temperature about 103°C (185 °F) from the Mar-M-247 superalloy baseline. Thus, an additive manufacturing-friendly and weld-friendly nickel-based superalloy is achieved in accordance with the composition described above in Table 1.

As such, described herein are embodiments of improved nickel-based superalloys and additive manufacturing processes using such nickel-based superalloys. The described embodiments provide an additive manufacturing-friendly nickel-based superalloy that is achieved, in part, by providing a carbon content that is below the existing elemental ranges for the traditional high carbon baseline Mar-M-247 composition and also below the newer low-carbon version of Mar-M-247. The resultant superalloy possesses a sufficient amount of gamma-prime phase and a strong solid solution strengthening response, along with other desired attributes of the conventional Mar-M-247 alloy, for improving fabrication yield using additive manufacturing processes. Accordingly, the described embodiments provide a superalloy based on Mar-M-247 but with an improved chemistry that better adapts the alloy for use with additive manufacturing processes.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope as set forth in the appended claims and their legal equivalents.

## Claims

1. A nickel-based superalloy consisting of, on a weight basis of the overall superalloy:
9.5% to 10.5% tungsten;
9.0% to 11.0% cobalt;
8.0% to 8.8% chromium;
5.3% to 5.7% aluminum;
2.8% to 3.3% tantalum;
0.3% to 1.6% hafnium;
0.5% to 0.8% molybdenum;
0.005% to 0.04% carbon; and
optionally:
silicon in an amount of less than 0.005%;
boron in an amount of less than 0.005%;
zirconium in an amount of less than 0.005%;
titanium in an amount of less than 0.005%;
phosphorous in an amount of less than 0.005%;
sulfur in an amount of less than 0.002%;
manganese, iron, copper, and niobium in amounts of less than 0.1% each;
the balance being nickel and unavoidable impurities.

2. The nickel-based superalloy of claim 1, wherein carbon is present in an amount of greater than 0.02%;

3. A method for manufacturing a nickel-based superalloy component comprising the steps of:
providing or obtaining, in a powdered form, a build material alloy consisting of, on a weight basis of the overall build material alloy:
9.5% to 10.5% tungsten;
9.0% to 11.0% cobalt;
8.0% to 8.8% chromium;
5.3% to 5.7% aluminum;
2.8% to 3.3% tantalum;
0.3% to 1.6% hafnium;
0.5% to 0.8% molybdenum;
0.005% to 0.04% carbon; and
optionally:
silicon in an amount of less than 0.005%;
boron in an amount of less than 0.005%;
zirconium in an amount of less than 0.005%;
titanium in an amount of less than 0.005%;
phosphorous in an amount of less than 0.005%;
sulfur in an amount of less than 0.002%;
manganese, iron, copper, and niobium in amounts of less than 0.1% each;
the balance being nickel and unavoidable impurities;
subjecting the build material alloy to a high energy density beam in an additive manufacturing process to selectively fuse portions of the build material to form a built component; and
subjecting the built component to a finishing process to precipitate a gamma-prime phase of the nickel-based superalloy.

4. The method of claim 3, wherein the additive manufacturing process comprises direct metal laser sintering.

5. The method of claim 3, wherein the finishing process comprises hot isostatic pressing or annealing.

6. The method of claim 5, wherein the finishing process further comprises encapsulation.

7. The method of claim 3 wherein carbon is present in the build material alloy in an amount of greater than 0.02%.

## Patentansprüche

1. Nickelbasierte Superlegierung, nach Gewichtsanteilen bezogen auf die Superlegierung insgesamt bestehend aus:
9,5 % bis 10,5 % Wolfram;
9,0 % bis 11,0 % Kobalt;
8,0 % bis 8,8 % Chrom;
5,3 % bis 5,7 % Aluminium;
2,8 % bis 3,3 % Tantal;
0,3 % bis 1,6 % Hafnium;
0,5 % bis 0,8 % Molybden;
0,005 % bis 0,04 % Kohlenstoff; und
wahlweise:
Silizium in einer Menge von weniger als 0,005 %;
Bor in einer Menge von weniger als 0,005 %;
Zirkonium in einer Menge von weniger als 0,005 %;
Titan in einer Menge von weniger als 0,005 %;
Phosphor in einer Menge von weniger als 0,005 %;
Schwefel in einer Menge von weniger als 0,002 %;
Mangan, Eisen, Kupfer und Niob jeweils in Mengen von weniger als 0,1 %;
wobei der Rest aus Nickel und unvermeidlichen Unreinheiten besteht.

2. Nickelbasierte Superlegierung nach Anspruch 1, wobei Kohlenstoff in einer Menge größer als 0,02 % vorhanden ist.

3. Verfahren zur Herstellung eines Bauteils aus einer nickelbasierten Superlegierung, folgende Schritte umfassend:
eine Baumateriallegierung in Pulverform bereitzustellen oder zu beschaffen, nach Gewichtsanteilen bezogen auf die Baumateriallegierung insgesamt bestehend aus:
9,5 % bis 10,5 % Wolfram;
9,0 % bis 11,0 % Kobalt;
8,0 % bis 8,8 % Chrom;
5,3 % bis 5,7 % Aluminium;
2,8 % bis 3,3 % Tantal;
0,3 % bis 1,6 % Hafnium;
0,5 % bis 0,8 % Molybden;
0,005 % bis 0,04 % Kohlenstoff; und
wahlweise:
Silizium in einer Menge von weniger als 0,005 %;
Bor in einer Menge von weniger als 0,005 %;
Zirkonium in einer Menge von weniger als 0,005 %;
Titan in einer Menge von weniger als 0,005 %;
Phosphor in einer Menge von weniger als 0,005 %;
Schwefel in einer Menge von weniger als 0,002%;
Mangan, Eisen, Kupfer und Niob jeweils in Mengen von weniger als 0,1 %;
wobei der Rest aus Nickel und unvermeidlichen Unreinheiten besteht;
die Baumateriallegierung in einem Additivherstellungsverfahren einem Strahl von hoher Energiedichte auszusetzen, um Teile des Baumaterials selektiv zu verschmelzen und so ein Bauteil auszubilden; und
das Bauteil einem Endbearbeitungsprozess zu unterziehen, um eine Gamma-Strich-Phase der nickelbasierten Superlegierung abzuscheiden.

4. Verfahren nach Anspruch 3, wobei das Additivherstellungsverfahren direktes Metall-Lasersintern umfasst.

5. Verfahren nach Anspruch 3, wobei der Endbearbeitungsprozess heißisostatisches Pressen oder Glühen umfasst.

6. Verfahren nach Anspruch 5, wobei der Endbearbeitungsprozess ferner Einkapseln umfasst.

7. Verfahren nach Anspruch 3, wobei Kohlenstoff in der Baumateriallegierung in einer Menge größer als 0,02 % vorhanden ist.

## Revendications

1. Superalliage à base de nickel composé de, sur une base pondérale du superalliage global :
9,5 % à 10,5 % de tungstène ;
9,0 % à 11,0 % de cobalt ;
8,0 % à 8,8 % de chrome ;
5,3 % à 5,7 % d'aluminium ;
2,8 % à 3,3 % de tantale ;
0,3 % à 1,6 % de hafnium ;
0,5 % à 0,8 % de molybdène ;
0,005 % à 0,04 % de carbone ; et
éventuellement :
silicium dans une quantité de moins de 0,005 % ;
bore dans une quantité de moins de 0,005 % ;
zirconium dans une quantité de moins de 0,005 % ;
titane dans une quantité de moins de 0,005 % ;
phosphore dans une quantité de moins de 0,005 % ;
soufre dans une quantité de moins de 0,002 % ;
manganèse, fer, cuivre et niobium dans des quantités de moins de 0,1 % chacun ;
le reste étant du nickel et les inévitables impuretés.

2. Superalliage à base de nickel de la revendication 1, dans lequel le carbone est présent dans une quantité de plus de 0,02 %.

3. Procédé de fabrication d'un composant en superalliage à base de nickel comprenant les étapes consistant à :
se procurer ou obtenir, sous forme de poudre, un alliage de matériau de construction composé de, sur une base pondérale de l'alliage de matériau de construction global :
9,5 % à 10,5 % de tungstène ;
9,0 % à 11,0 % de cobalt ;
8,0 % à 8,8 % de chrome ;
5,3 % à 5,7 % d'aluminium ;
2,8 % à 3,3 % de tantale ;
0,3 % à 1,6 % de hafnium ;
0,5 % à 0,8 % de molybdène ;
0,005 % à 0,04 % de carbone ; et
éventuellement :
silicium dans une quantité de moins de 0,005 % ;
bore dans une quantité de moins de 0,005 % ;
zirconium dans une quantité de moins de 0,005 % ;
titane dans une quantité de moins de 0,005 % ;
phosphore dans une quantité de moins de 0,005 % ;
soufre dans une quantité de moins de 0,002 % ;
manganèse, fer, cuivre et niobium dans des quantités de moins de 0,1 % chacun ;
le reste étant du nickel et les inévitables impuretés ;
soumettre l'alliage de matériau de construction à un faisceau à haute densité d'énergie dans une opération de fabrication additive pour faire fondre sélectivement des parties du matériau de construction pour former un composant construit ; et
soumettre le composant construit à une opération de finition pour précipiter une phase gamma-prime du superalliage à base de nickel.

4. Procédé de la revendication 3, dans lequel l'opération de fabrication additive comprend un frittage laser direct de métal.

5. Procédé de la revendication 3, dans lequel l'opération de finition comprend un pressage isostatique à chaud ou un recuit.

6. Procédé de la revendication 5, dans lequel l'opération de finition comprend en outre une encapsulation.

7. Procédé de la revendication 3 dans lequel le carbone est présent dans l'alliage de matériau de construction dans une quantité de plus de 0,02 %.
